(19) **Europäisches Patentamt**
**European Patent Office**
**Office européen des brevets**

(11) **EP 3 730 651 B1**

(12) **EUROPEAN PATENT SPECIFICATION**

(45) Date of publication and mention
of the grant of the patent:
**19.06.2024   Bulletin 2024/25**

(21) Application number: **18891397.4**

(22) Date of filing: **20.11.2018**

(51) International Patent Classification (IPC):
*C22C 38/38* (2006.01)   *C22C 38/02* (2006.01)
*C22C 38/06* (2006.01)   *C22C 38/28* (2006.01)
*C22C 38/26* (2006.01)   *C22C 38/32* (2006.01)
*C22C 38/00* (2006.01)   *C21D 8/02* (2006.01)
*C21D 9/46* (2006.01)

(52) Cooperative Patent Classification (CPC):
**C21D 8/02; C21D 9/46; C22C 38/02; C22C 38/06;
C22C 38/26; C22C 38/28; C22C 38/32;
C22C 38/38; C23C 2/02; C23C 2/0224; C23C 2/024**

(86) International application number:
**PCT/KR2018/014272**

(87) International publication number:
**WO 2019/124766 (27.06.2019 Gazette 2019/26)**

(54) **HIGH YIELD RATIO-TYPE HIGH-STRENGTH STEEL SHEET AND METHOD FOR MANUFACTURING SAME**

HOCHFESTES STAHLBLECH MIT HOHER STRECKGRENZE UND VERFAHREN ZUR HERSTELLUNG DAVON

TÔLE D'ACIER À HAUTE RÉSISTANCE DE TYPE À RAPPORT DE RENDEMENT ÉLEVÉ ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **24.12.2017   KR 20170178944**

(43) Date of publication of application:
**28.10.2020   Bulletin 2020/44**

(73) Proprietor: **POSCO Co., Ltd
Pohang-si, Gyeongsangbuk-do 37859 (KR)**

(72) Inventors:
• **SEO, Chang-Hyo
Gwangyang-si, Jeollanam-do 57807 (KR)**
• **AHN, Yeon-Sang
Gwangyang-si, Jeollanam-do 57807 (KR)**

(74) Representative: **Meissner Bolte Partnerschaft
mbB
Patentanwälte Rechtsanwälte
Postfach 86 06 24
81633 München (DE)**

(56) References cited:
**JP-A- 2002 161 336      JP-A- 2002 161 336
JP-A- 2010 285 636      JP-A- 2010 285 636
JP-A- 2014 196 557      JP-A- 2014 196 557
KR-B1- 101 630 975      KR-B1- 101 630 975
KR-B1- 101 676 137      KR-B1- 101 676 137**

Remarks:
The file contains technical information submitted after
the application was filed and not included in this
specification

**Description**

[Technical Field]

The present invention relates to a high-strength steel sheet and a method of manufacturing the same, and more particularly, to a high-strength steel sheet having a high yield ratio and excellent plating wettability and stretch flangeability, and a method of manufacturing the same.

[Background Art]

Recently, the use of high-strength steel sheets is required to improve fuel efficiency or improve durability by various environmental regulations and energy use regulations. In particular, as impact stability regulations of automobiles have recently been expanded, high-strength steel sheets having excellent yield strength have been adopted in structural members such as members, seat rails, pillars and the like to improve impact resistance of the vehicle body. The structural member has a characteristic that is advantageous in absorbing impact energy as the yield strength compared with tensile strength, that is, the yield ratio (yield strength/tensile strength) is higher than the tensile strength. However, in general, as the strength of the steel sheet increases, elongation decreases, resulting in a problem in which workability deteriorates. Therefore, there is a need to develop a material that may compensate therefor.

Typically, methods for strengthening steel include solid solution strengthening, precipitation strengthening, strengthening by grain refinement, transformation strengthening, and the like. However, the solid solution strengthening and the strengthening by grain refinement among the above methods have a disadvantage that it is very difficult to manufacture high strength steel having a tensile strength of 490 MPa or higher.

On the other hand, the precipitation-strengthened high-strength steel is the technique to strengthen the steel by adding carbon and nitride forming elements such as Cu, Nb, Ti, V, etc. to precipitate carbon and nitride or to secure the strength by refinement of grains by suppressing grain growth by fine precipitates. The above technique has an advantage of easily obtaining high strength compared to low manufacturing costs, but has a disadvantage in that since the recrystallization temperature rapidly rises by fine precipitates, high temperature annealing must be performed to secure sufficient ductility by causing sufficient recrystallization. In addition, precipitation- strengthened steel, which is strengthened by precipitating carbon and nitride on a ferrite matrix, has a problem in that it is difficult to obtain high-strength steel of 600 MPa or more.

On the other hand, as the transformation reinforced high strength steel, ferrite-martensitic dual-phase steel containing hard martensite in a ferrite matrix, Transformation Induced Plasticity (TRIP) steel using the transformation induced plasticity of residual austenite, or Complex Phase (CP) steel which consists of low-temperature structure steel of ferrite and hard bainite or martensite, have been variously developed. However, the tensile strength that may be implemented in the improved high-strength steel (of course, the strength may be increased by increasing the amount of carbon, but considering practical aspects such as spot weldability or the like) has a limit of about 1200Mpa level. In addition, hot press forming steel, which secures final strength by rapid cooling through direct contact with a die that is water-cooled after molding at high temperature, has been spotlighted for application to structural members to secure safety against collision. However, the expansion of application is not large due to excessive investment in facilities and high heat treatment and process costs.

In recent years, to further improve the stability of a passenger in a collision, high-strength and light-weighting of a vehicle's seat parts have been simultaneously conducted. These parts are manufactured by two methods, not only roll forming but also press forming. The seat part is a part that connects the passenger and the vehicle body, and must be supported with high stress to prevent the passenger from being bounced out during a collision. For this, high yield strength and yield ratio are required.

In addition, most of the parts to be processed require stretch flangeability, and therefore, it is required to apply a steel material having excellent hole expandability.

A representative manufacturing method for increasing yield strength is to use water cooling during continuous annealing. That is, a steel sheet having a tempered martensite structure may be produced by tempering process of soaking the steel in an annealing process and immersing the soaked steel sheet in water. However, this method may cause inferior shape quality due to temperature variations in the width and length directions during water cooling, so that has very serious disadvantages such as deterioration of workability and material deviation by location when roll forming is applied.

As one of the prior art references, Patent Document 1 may be provided. In this technique, after continuously annealing steel having 0.18% or more of carbon, water cooling is performed to room temperature, and then, the steel is subjected to an overaging treatment at a temperature of 120 to 300°C for 1 to 15 minutes, thereby producing the steel containing 80 to 97% by volume of martensite. When the ultra-high strength steel is manufactured by the method of tempering after water cooling as in Patent Document 1, the yield ratio is very high, but a problem may arise in that the shape quality of the coil deteriorates due to the temperature deviation in the width direction and the length direction. Therefore, during roll forming, problems such as material defects and workability deterioration may occur depending on parts.

In addition, as one of the other prior art references, Patent Document 2 can be cited. In this case, a method of manufacturing a cold rolled steel sheet that obtains high strength and high ductility at the same time by utilizing tempered martensite and also has excellent plate shape after continuous annealing is disclosed. But there is concern about the inferiority of weldability due to the high carbon content of 0.2% or higher, and the possibility of causing dents in the furnace due to the high content of Si.

Patent document 3 relates to a high yield ratio type high strength cold-rolled steel sheet having excellent hole expandability, and a manufacturing method thereof. The high yield ratio type high strength cold-rolled steel sheet comprises: 0.035-0.07 wt% of C, 0.3 wt% or less (excluding 0 wt%) of Si, 2.0-3.5 wt% of Mn, 0.3-1.2 wt% of Cr, 0.03-0.08 wt% of Ti, 0.01-0.05 wt% of Nb, 0.01-0.1 wt% of Sol.Al, 0.001-0.005 wt% of B, and the remainder of Fe and inevitable impurities. The high yield ratio type high strength cold-rolled steel sheet includes martensite having 90% or more (including 100%) of an area fraction. The average diameter of the martensite is less than $3\mu$m. The martensite includes tempered martensite and lath martensite. The average diameter of the lath martensite is less than $1\mu$m. The area fraction of the lath martensite having $1\mu$m or more of the diameter is less than 5%. The present invention includes 150/$\mu$m2 or more of precipitate having 10 nm or less of the diameter.

Patent document 4 relates to a high strength cold-rolled steel sheet and a hot dip galvanized steel sheet with excellent bendability and hole expansion property; and a manufacturing method thereof. The high strength cold-rolled steel sheet with excellent bendability and hole expansion property comprises a chemical composition of 0.06-0.1 wt% of C; 0.05-0.5 wt% of Si; 2.0-2.5 wt% of Mn; 0.001-0.10 wt% of P; 0.010 wt% or less of S; 0.01-0.10 wt% of Sol.Al; 0.010 wt% or less of N; at least one of Ti and Nb in a range of 0.003-0.08 wt% respectively; and the remainder of Fe and inevitable impurities, wherein a steel fine structure consists of 40 wt% or less of martensite, 30-40 wt% of bainite, and 20-30 wt% of ferrite in an area fraction, a hardness ratio of bainite to martensite equal to or greater than 0.7 and precipitations with a size of 10 nano or less formed equal to or less than 1.5x106/mm2 in the ferrite

In addition, in the prior art, there is a problem that plating peeling occurs due to poor plating wettability depending on the components and operating conditions.

Therefore, there is a need for a high-strength steel material exhibiting high yield ratio and hole workability and excellent plating wettability by solving the above-mentioned problems.

(Patent Document 1) Japanese Patent Laid-Open Publication No. 1992-289120
(Patent Document 2) Japanese Patent Laid-Open Publication No. 2010-090432
(Patent Document 3) KR101630975B1
(Patent Document 4) KR101676137B1

[Disclosure]

[Technical Problem]

An aspect of the present invention is to provide a high yield ratio-type high strength steel sheet having excellent plating wettability and stretch flangeability.

Another aspect of the present invention is to provide a method of manufacturing a high yield ratio-type high strength steel sheet having excellent plating wettability and stretch flangeability.

The invention is disclosed in the appended claims.

[Advantageous Effects]

According to the present invention a high yield ratio high strength steel sheet having not only high tensile strength of 980 MPa or more but also excellent plating wettability and stretch flangeability is disclosed.

[Description of Drawings]

FIG. 1 is an image illustrating a microstructure according to the present invention (Inventive Example 5-1).
FIG. 2 is a schematic view illustrating that the formation of B-Mn-based oxide increases when B is added, thereby degrading plating wettability.
FIG. 3 is an image illustrating the plating wettability evaluation criteria.

[Best Mode for Invention]

Hereinafter, the present invention will be described.

Hereinafter, a high yield ratio-type high strength steel sheet according to the present invention will be described in detail.

A high yield ratio-type high strength steel sheet according to the present invention includes: in weight%, 0.04 to 0. 09% of C, 0.2% or less (excluding 0%) of Si, 2.0 to 3.5% of Mn, 0.3 to 1.2% of Cr, 0.03 to 0.08% of Ti, 0.01 to 0.05% of Nb, 0.0010 to 0.0050% of B, 0.01 to 0.10% of Sol.Al, 0.001 to 0.10% of P, 0.010% or less (including 0%) of S, 0.010% or less (excluding 0%) of N, a remainder of Fe and unavoidable impurities, the contents of Si, Cr and C satisfying the following relationship 1,

[Relationship 1]

$$(Si + Cr)/2C \geq 5$$

where each component indicates a weight content; and
as a microstructure, in an area fraction, 50% or more of bainite, 20 to 40% of tempered martensite, and residual ferrite, in which a hardness ratio of a bainite phase and a tempered martensite phase at a 1/4t point of a thickness of a steel sheet (where t is the thickness of the steel sheet (mm)), represented by the following relationship 2, is 1.3 or less,

[Relationship 2]

$$(HB/HTM) \leq 1.3$$

where HB is a bainite hardness, and HTM is a tempered martensite hardness.

Hereinafter, components and component ranges will be described.

C: 0.04 to 0.09% by weight (hereinafter also referred to as "%")

Carbon (C) is a very important element added to strengthen the transformation structure. Carbon promotes high strength and promotes the formation of martensite in the transformation structure steel. When the carbon content increases, the amount of martensite in steel increases. However, if the amount exceeds 0.09%, the strength of martensite increases, but the difference in strength with ferrite having a relatively low carbon concentration increases. This strength difference deteriorates stretch flangeability because breakage easily occurs at the interphase interface when stress is applied. In addition, due to poor weldability, welding defects occur when machining parts. On the other hand, if the carbon content is lowered to be less than 0.04%, it is difficult to secure the strength of martensite presented in the present invention. Therefore the content of C is limited to 0.04 to 0.09%, and the content of C may be, in more detail, 0.05 to 0.09%.

Si: 0.2% or less (excluding 0%)

Silicon (Si) is an element that promotes ferrite transformation and increases the carbon content in non-transformed austenite to form a composite structure of ferrite and martensite, thereby interfering with an increase in the strength of martensite. In addition, since it not only causes surface scale defects in relation to surface properties, but also reduces chemical conversion treatment, it may be desirable to limit the Si addition as much as possible. Therefore, the content of Si is limited to 0.2% or less (excluding 0%) .

Mn: 2.0 to 3.5%

Manganese (Mn) is an element that refines particles without damaging ductility and prevents hot embrittlement by the formation of FeS by precipitating sulfur into MnS, and at the same time, lowers the critical cooling rate at which martensite phase is obtained, thereby forming martensite more easily. If the content is less than 2.0%, it is difficult to secure the target strength in the present invention, and if the content exceeds 3.5%, since there is a high possibility of occurrence of a problem such as deterioration of weldability, hot rolling properties and plating wettability, the range of the manganese content is limited to 2.0 to 3.5%, and in more detail, the manganese content may be 2.3 to 3.2%.

Cr: 0.3 to 1.2%

Chromium (Cr) is an element added to improve the hardenability of the steel and ensure high strength, and in the present invention, is an element that plays a very important role in forming the low-temperature transformation phase, martensite. If the content is less than 0.3%, it is difficult to secure the above-mentioned effect, and if the content exceeds 1.2%, the effect is not only saturated, but an excessive increase in hot rolling strength also causes the problem of cold rolling deterioration. Therefore, the Cr content is limited to 0.3 to 1.2%. The Cr content may be, in more detail, 0.3 to 1.0%.

Ti: 0.03 to 0.08% and Nb: 0.01 to 0.05%

Titanium (Ti) and niobium (Nb) are elements effective for increasing the strength of the steel sheet and refining the grains by nano precipitates. When these elements are added, the elements are combined with carbon to form very fine nano precipitates. These nano-precipitates serve to reduce the difference in hardness between phases by strengthening the matrix structure.

In the present invention the content of titanium is limited to 0.03 to 0. 08%, and the content of niobium is limited to 0.01 to 0.05%. If the content of each element is less than a lower limit value of the content of each component, the distribution density of the nano-precipitates decreases and the difference in the hardness ratio between phases increases. If the content of each element exceeds the lower limit value of the content of each component, ductility may be significantly reduced due to an increase in manufacturing costs and excessive precipitates. On the other hand, Ti may be, in more detail, 0.03 to 0.06%.

B: 0.0010 to 0.0050%

Boron (B) is an element that delays the transformation of austenite into pearlite in a process of cooling during annealing, and is added as an element that inhibits ferrite formation and promotes the formation of martensite. However, if the content is less than 0.0010%, it may be difficult to obtain the above-described effect, and if the content exceeds 0.0050%, a large amount of annealing oxide is generated in annealing, resulting in poor plating wettability and an increase in cost due to excessive ferroalloy content. Therefore, the content thereof is limited to 0.0010% to 0.0050%.

Sol.Al: 0.01 to 0.10%

Soluble aluminum (Sol.Al) is combined with oxygen to cause deoxidation and is a component effective to improve the martensitic hardenability by distributing carbon in ferrite to austenite. If the content is less than 0.01%, it may be difficult to secure the effect, and if the content exceeds 0.1%, the effect is not only saturated, but also increases the manufacturing costs, and thus, the content of Sol.Al is limited to 0.01 to 0.1%.

P: 0.001 to 0.10%

Phosphorus (P) is a substituted alloy element with a greatest solid solution strengthening effect, and serves to improve in-plane anisotropy and improve strength. If the content is less than 0.001%, not only the effect may not be secured, but also causes a problem in terms of manufacturing costs, whereas if added excessively, press formability may deteriorate and steel embrittlement may occur. Therefore, the content of P is limited to 0.001 to 0.10%.

S: 0.010% or less (including 0%)

Sulfur (S) is an impurity element in steel and is an element that inhibits the ductility and weldability of the steel sheet. If the content exceeds 0.010%, since the possibility of inhibiting the ductility and weldability of the steel sheet is high, the content of S is limited to 0.010% or less.

N: 0.010% or less (excluding 0%)

Nitrogen (N) is an element that is effective in stabilizing austenite, and if the content exceeds 0.010%, the risk of cracking during continuous casting through AlN formation or the like is greatly increased, and thus, the upper limit is limited to 0.01%.

The contents of Si, Cr and C satisfy the following relationship 1.

[Relationship 1]

$$(Si + Cr)/2C \geq 5,$$

in this case, each component indicates the weight content.

In a case in which the contents of Si, Cr and C do not satisfy the relationship 1, there is a problem that the strength is lowered.

In the relationship 1, the value of (Si + Cr)/2C should be 5 or more to secure the strength, and the C content of a secondary phase may be reduced to reduce the difference in phase strength. In detail, in the relationship 1, the solid solution concentration of Si and Cr, in detail, in ferrite, is increased to effectively reduce the difference in hardness between phases. The value of (Si + Cr) /2C may be, in more detail, 5.2 or more.

A high yield ratio-type high strength steel sheet according to the present invention includes, as a microstructure, in an area fraction, 50% or more of bainite, 20 to 40% of tempered martensite, and residual ferrite, in which a hardness ratio of a bainite phase and a tempered martensite phase at a 1/4t point of a thickness of a steel sheet (where t is the thickness of the steel sheet (mm)), represented by the following relationship 2, is 1.3 or less.

[Relationship 2]

$$(HB/HTM) \leq 1.3$$

where HB is a bainite hardness, and HTM is a tempered martensite hardness.

Control of microstructures and precipitates is very important to manufacture a steel material having stretch flangeability of, e.g., HER 50% or more and a high yield ratio, e.g., a yield ratio of 0.8 or higher. As a method of simultaneously increasing the stretch flangeability and yield ratio, a technique for securing a low-temperature single-phase structure is required. In general, the structure having the highest strength among the low-temperature structure is martensite, and as is well known, an easiest method for preparing martensite is to perform water cooling and tempering treatment after annealing which is maintained for a sufficient time to form austenite.

However, the present invention is intended to secure martensite by controlling alloy elements, since the water cooling method may cause productivity deterioration due to problems such as material deviation, shape defects or the like. For example, it is the technique to secure martensite even at a low cooling rate by adding a certain amount or more of a hardenable element such as Mn, Cr and the like. However, this method may cause problems such as deterioration of weldability due to high addition of the alloying element. Therefore, in the present invention it was intended to significantly reduce the carbon content that has the greatest influence on the weldability. Accordingly, in the present invention the carbon content is limited to 0.09% or less.

To secure a relatively high yield ratio under the cooling conditions as in the present invention it is necessary to add as many alloy elements as possible. However, these attempts additionally cause problems such as deterioration of weldability and an increase in hot rolled strength, and thus, the problems need to be resolved. However, when controlling nanoprecipitates and the size of martensite without adding excessive alloying elements according to exemplary embodiment, the stretch flangeability and yield ratio proposed in the present invention may be satisfied.

The high-strength steel sheet according to the present invention includes transformation structure and contains 50% or more of bainite and 20 to 40% of tempered martensite in an area fraction as a microstructure of a transformation structure. To increase the HER and yield ratio, a 100% transformation structure (bainite and tempered martensite) may be advantageous. To increase strength, it may be desirable to ensure that the size of the transformation structure is as small as possible. When the average particle diameter of martensite and bainite was outside the scope of the present disclosure, the bending workability, stretch flangeability and yield ratio could not be satisfied.

If the fraction of bainite in the microstructure is less than 50%, the required strength may not be satisfied.

If the content of the tempered martensite in the microstructure is less than 20%, the required strength may not be satisfied, and if the content exceeds 40%, the elongation may be lowered.

The average particle diameter of the tempered martensite may be 2 $\mu$m or less, the average particle diameter of bainite may be 3 $\mu$m or less, and the area fraction of the bainite structure having a particle size exceeding 3 um may be 5% or less.

If the average particle diameter of the martensite is increased to 2 $\mu$m or more, or if the average particle diameter of bainite is 3 $\mu$m or more, the bending workability, stretch flangeability and yield ratio to be obtained in the present invention may not be obtained.

The distribution density of nano precipitates having a diameter of 10 nm or less among the bainite and tempered martensite structures may be 150/$\mu$m$^2$ or more.

According to the research of the present inventors, it may be preferable to make the size of the precipitate as small as possible to improve the strength of the microstructure, and in detail, when the precipitation of 10 nm or less is secured to be 150 pieces/$\mu$m$^2$ or more, a high yield ratio of 0.8 or more suggested by the present invention may be secured. In addition, the strength of the matrix structure is increased by the fine precipitates in the steel, so that the hardness ratio between phases is 1.3 or less, thereby manufacturing a high-strength steel sheet having a HER value of 50% or more and excellent stretch flange properties and yield strength.

The nano precipitates may be (Ti, Nb, Cr) C precipitates.

In terms of stretch flangeability, it is very important to control the strength ratio between phases, and for example, to secure 50% or more of HER, it is necessary to control the hardness ratio of the soft phase and the hard phase in the microstructure to be within 1.3. In the case in which the hardness value of a transformation phase and the hardness ratio between phases were not satisfied, it was impossible to secure a HER value of 50% or more and a yield ratio of 0.8 or more.

If the hardness ratio of the bainite phase and the tempered martensite phase represented by the following relationship 2 at the point of 1/4 t of the thickness of the steel sheet (where t indicates the thickness of the steel sheet (mm)) is greater than 1.3, as the phase-to-phase strength deviation increases, the HER and bending workability may be deteriorated.

[Relationship 2]

$$(HB/HTM) \leq 1.3$$

where HB indicates bainite hardness, and HTM indicates tempered martensite hardness.

The steel sheet may have a tensile strength of 980 MPa or more and a yield strength of 780 MPa or more.

The steel sheet may have a yield ratio of 0.8 or more and a HER value of 50% or more.

A zinc-based plating layer may be formed on at least one surface of the steel sheet.

Hereinafter, a method of manufacturing a high yield ratio-type high strength steel sheet according to the present disclosure will be described in detail.

A method of manufacturing a high yield ratio-type high strength steel sheet according to the present invention includes: preparing a slab including, in weight%, 0.04 to 0.09% of C, 0.2% or less (excluding 0%) of Si, 2.0 to 3.5% of Mn, 0.3 to 1.2% of Cr, 0.03 to 0.08% of Ti, 0.01 to 0.05% of Nb, 0.0010 to 0.0050% of B, 0.01 to 0.10% of Sol.Al, 0.001 to 0.10% of P, 0.010% or less (including 0%) of S, 0.010% or less (excluding 0%) of N, a remainder of Fe and unavoidable impurities, the contents of the Si, the Cr and the C satisfying the following relationship 1,

[Relationship 1]

$$(Si + Cr)/2C \geq 5$$

where each component indicates a weight content;

hot rolling the slab such that a temperature at a finish rolling outlet side is Ar$_3$ to Ar$_3$+50°C°C, so as to obtain a hot rolled steel shee;

coiling the hot rolled steel sheet at a temperature in a range of 600 to 750 °C;

cold rolling the hot rolled steel sheet at a reduction ratio of 40 to 70% so as to obtain a cold rolled steel sheet;

continuously annealing the cold rolled steel sheet at a temperature in a range of Ac$_3$-60 to Ac$_3$ °C;

performing a primary cooling to a temperature of 600 to 700 °C at a cooling rate of 1 to 20 °C/sec after the continuously annealing;

after the primary cooling, performing a secondary cooling to a temperature of Ms-100 to Ms °C at a cooling rate of 5 to 20 °C/second; and

after the secondary cooling, performing an overaging treatment,

wherein contents of the Mn and the B and an annealing temperature (a,°C) satisfy the following relationship 3.

[Relationship 3]

$$19000 [B] + 4.5 [Mn] + 0.06a \leq 104$$

where [B] and [Mn] indicate weight percent of a corresponding element.

Hot Rolling

The hot-rolled steel sheet is obtained by hot rolling the slab having the above-described steel composition such that the temperature at the outlet side of the finish rolling is $Ar_3$ to $Ar_3+50°C$.

If the temperature at the outlet side is less than $Ar_3$ during hot rolling, the hot deformation resistance is likely to increase rapidly, and top and tail portions and edges of the hot rolled coil become single-phase areas, thereby increasing in-plane anisotropy and deteriorating formability. On the other hand, if the temperature at the outlet side exceeds $Ar_3+50°C$, not only too large oxidation scales occur, but also there is a possibility that the microstructure of the steel sheet may become coarse.

Coiling

The hot-rolled steel sheet, having been subjected to hot rolling as described above, is coiled at a temperature in a range of 600 to 750 °C.

If the coiling temperature is less than 600 °C, excessive martensite or bainite is generated, resulting in excessive strength increase of the hot rolled steel sheet, which may cause manufacturing problems such as shape defect or the like due to load during cold rolling. On the other hand, if the temperature exceeds 750 °C, the pickling property deteriorates due to an increase in the surface scale, and thus, the coiling temperature is limited to 600 to 750 °C.

Cold Rolling

After the coiling operation, the hot-rolled steel sheet is cold-rolled at a reduction ratio of 40 to 70% to obtain a cold-rolled steel sheet. It may be preferable to perform a pickling process before cold rolling the hot rolled steel sheet.

If the rolling reduction is less than 40% during the cold rolling, the recrystallization driving force is weakened, and there is a great possibility of problems in obtaining a good recrystallized grain, and shape correction is very difficult.

On the other hand, if the rolling reduction ratio exceeds 70%, there is a high possibility of cracking at the edge of the steel sheet, and the rolling load increases rapidly.

Continuous Annealing

The cold rolled steel sheet having subjected to cold rolling as described above is continuously annealed at a temperature in the range of $Ac_3-60$ to $Ac_3°c$.

The cold rolled steel sheet undergoes a continuous annealing process, thereby providing a base for a microstructure required in the present invention. The continuous annealing is performed in the temperature range of $Ac_3-60$ to $Ac_3$. If the annealing temperature is less than $Ac_3-60$ °C, it is difficult to secure a yield ratio of 0.8 or higher since the ferrite is generated in a relatively large amount and the yield strength is thus lowered. In detail, the difference in hardness between phases with the transformation phase increases due to the production of large amounts of ferrite, and thus, the condition of 1.3 or less may not be satisfied. On the other hand, if the annealing temperature exceeds Acs, the size of the martensite phase produced upon cooling increases due to the increase in the austenitic grain size due to the high temperature annealing, and thus, the particle size of the preferred microstructure of the present invention may not be satisfied. In addition, as the annealing temperature increases, the amount of annealing oxide increases on a surface layer portion, resulting in poor plating adhesion. In addition, even if the annealing temperature condition is satisfied, if the annealing temperature does not satisfy the following relationship 3, the plating wettability is inferior and the plating adhesion deteriorates.

```
[Relationship 3]

19000[B] + 4.5[Mn] + 0.06a≤104
```

where [B] and [Mn] indicate the weight percent of the corresponding element, and a represents the annealing temperature (°C)).

Primary Cooling

After the continuous annealing, primary cooling is performed at a cooling rate of 1 to 20°C/sec to a temperature of 600 to 700°C.

This primary cooling is a process of inhibiting ferrite transformation to transform most of austenite to martensite.

In the case of the primary cooling, the ferrite fraction may increase if the cooling end temperature is less than 600 °C, and the ferrite fraction may increase if the cooling end temperature exceeds 700 °C.

In the case of the primary cooling, if the cooling rate is less than 1 °C/sec, the ferrite fraction may increase, and there is no problem even in the case in which the ferrite fraction exceeds 20 °C/sec, but the upper limit of the cooling rate may be limited to 20 °C/sec in consideration of the cooling capacity of the cooling equipment or the like.

Secondary Cooling

After the primary cooling, secondary cooling is performed at a cooling rate of 5 to 20 °C/sec to a temperature of Ms-100°C to Ms°C.

In the secondary cooling, austenite begins to transform into martensite, but it does not cool down to below the temperature at which the martensite transformation ends, thereby obtaining a tempered martensite structure.

By performing the secondary cooling to the temperature range of Ms-100 to Ms °C, and then performing overaging while maintaining the temperature, high yield strength and a high hole expanding ratio (HER) may be secured, as well as securing the shape in the width and length directions of the coil.

In the case of the secondary cooling, if the cooling end temperature is less than Ms-100 °C, the amount of martensite increases excessively during the overaging treatment, resulting in simultaneous increase in yield strength and tensile strength and causing very deteriorating ductility. In detail, shape deterioration occurs due to rapid cooling, and thus workability deterioration may occur when machining automotive parts. On the other hand, if cooling to a temperature exceeding Ms is performed, the austenite produced during annealing may not be transformed into martensite and may be produced as high temperature transformation phases, such as bainite, granular bainite, or the like, causing a problem in which the yield strength is rapidly deteriorated. The occurrence of such a structure is accompanied by a decrease in yield ratio and deterioration of hole expandability, and thus, a high yield ratio-type high strength steel sheet having excellent stretch flangeability proposed in the present invention may not be manufactured.

In the case of the secondary cooling, if the cooling rate is less than 5 °C/sec, the ferrite fraction may increase, and if the cooling rate exceeds 20 °C/sec, there is a concern that quality problems such as twisting of the coil shape or the like due to rapid cooling may occur.

Overaging

After the secondary cooling, overaging is performed.

In the overaging, the aging time may be preferably adjusted such that the entire structure becomes 50% or more of bainite and 20 to 40% of tempered martensite in an area fraction.

After the overaging, a zinc-based plating operation of forming a zinc-based plating layer on at least one surface of the steel sheet may be further included.

Skin Pass Rolling

After the overaging, or after the zinc-based plating operation, an operation of skin pass rolling with an elongation of 0.1 to 1.0% may further be included.

In general, in case of skin-pass rolling the transformed structure steel, a yield strength increase of at least 50 MPa or more occurs with little increase in tensile strength. If the elongation is less than 0.1%, it is difficult to control the shape, and if the elongation exceeds 1.0%, the workability is greatly unstable by the high elongation operation. Therefore, it may be preferable to limit the elongation to 0.1 to 1.0% at the time of performing skin pass rolling.

According to the method of manufacturing a high yield ratio-type high strength steel sheet according to the present disclosure, a high yield ratio-type high strength steel sheet having, not only a tensile strength of 980 MPa or more, a yield strength of 780 MPa or more, a yield ratio of 0.8 or more and an HER value of 50% or more, but also excellent plating wettability, may be obtained.

[Mode for Invention]

Hereinafter, an example of the present invention will be described in more detail.

(Example)

The steel slab having the steel composition of Table 1 and satisfying the conditions of Table 2 below was reheated for 1 hour at a temperature of 1200 °C in a heating furnace, and was hot rolled under the conditions of Table 3, followed by being coiled.

After pickling the hot-rolled steel sheet, cold rolling was performed at a cold rolling reduction of 45% to prepare a cold-rolled steel sheet.

The cold-rolled steel sheet was subjected to continuous annealing, primary and secondary cooling under the conditions illustrated in Table 3 below, and then, subjected to skin pass rolling at a rolling reduction rate of 0.2%. In this case, the primary cooling was performed to 650 °C.

In Table 3, FDT is a hot finish rolling temperature, CT is a coiling temperature, SS is a continuous annealing temperature, and RCS is a secondary cooling end temperature.

For the cold-rolled steel sheet having been subjected to the skin pass rolling as described above, the microstructure fraction, the average particle diameter of martensite (TM) and bainite (B), the hardness ratio between phases, and the distribution density of nano precipitates of 10 nm or less in the steel were investigated, and the results are illustrated in Table 4 below.

In this case, the hardness of the transformation structure was measured by using a Nano-Indenter (NT110) device to measure 100 points in a square shape with a load of 2 g to utilize values excluding maximum and minimum values. In addition, bainite, martensite and nano precipitates were evaluated by FE-TEM. In detail, the size and distribution density of nano precipitates were evaluated with an image of precipitate structure measured by FE-TEM, by using an image analyzer (image analysis) equipment. In addition, the fraction of the microstructure was observed by SEM and then the image analyzer (image analysis) was used.

In addition, a JIS 5 tensile specimen was prepared to measure yield strength (YS), tensile strength (TS), elongation (T-El), HER, yield ratio (YR) and plating wettability, and the results are illustrated in Table 5 below.

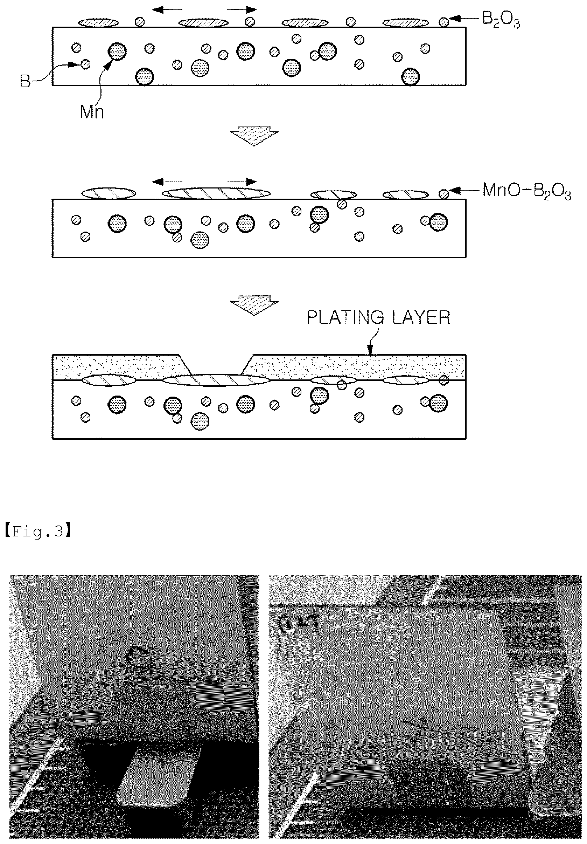

As illustrated in FIG. 3, in the evaluation of plating wettability in Table 5, when removing the sealer by adhering a sealer to the surface layer of the plating material, and when the plating layer is not peeled off, it is evaluated as a normal material, and when the plating layer was peeled off, it was evaluated as a plating peeling material. The normal material is indicated by O, and the plated peeling material is indicated by X.

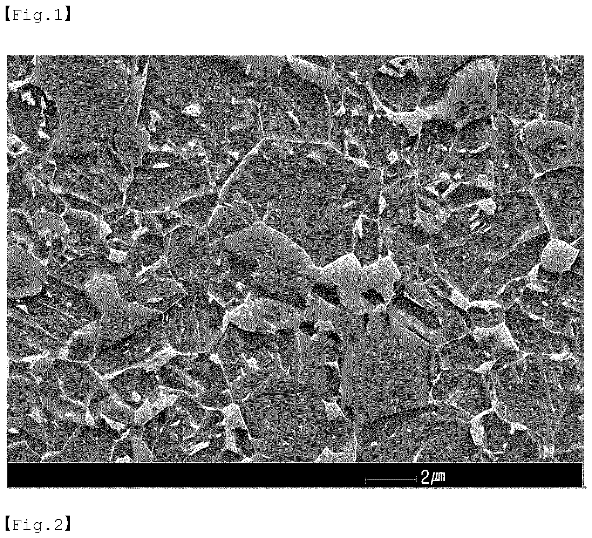

On the other hand, the microstructure of the inventive example (5-1) was observed, and the results are illustrated in FIG. 1.

[Table 1]

| Steel No. | C | Mn | Si | P | S | Al | Cr | Ti | Nb | B | N | Remarks |
|---|---|---|---|---|---|---|---|---|---|---|---|---|
| 1 | 0.063 | 2.97 | 0.137 | 0.011 | 0.0034 | 0.026 | 1 | 0.047 | 0.031 | 0.0021 | 0.004 | IS |
| 2 | 0.062 | 2.42 | 0.133 | 0.011 | 0.0036 | 0.024 | 1 | 0.045 | 0.031 | 0.0017 | 0.0047 | |
| 3 | 0.047 | 2.94 | 0.139 | 0.011 | 0.0033 | 0.022 | 1 | 0.044 | 0.031 | 0.002 | 0.004 | |
| 4 | 0.043 | 2.46 | 0.131 | 0.011 | 0.0032 | 0.023 | 1.01 | 0.043 | 0.031 | 0.0021 | 0.0045 | |
| 5 | 0.073 | 2.95 | 0.108 | 0.011 | 0.0023 | 0.031 | 0.97 | 0.049 | 0.032 | 0.0022 | 0.0034 | |
| 6 | 0.051 | 2.97 | 0.101 | 0.011 | 0.002 | 0.034 | 0.69 | 0.05 | 0.032 | 0.002 | 0.0035 | |
| 7 | 0.062 | 2.99 | 0.125 | 0.011 | 0.002 | 0.033 | 0.52 | 0.048 | 0.032 | 0.0021 | 0.0035 | |
| 8 | 0.062 | 2.74 | 0.106 | 0.011 | 0.002 | 0.01 | 0.71 | 0.052 | 0.032 | 0.0019 | 0.0035 | |
| 9 | 0.085 | 2.52 | 0.105 | 0.011 | 0.002 | 0.035 | 0.79 | 0.051 | 0.032 | 0.0021 | 0.0035 | |
| 10 | 0.076 | 2.65 | 0.107 | 0.01 | 0.002 | 0.033 | 0.5 | 0.05 | 0.031 | 0.0023 | 0.0033 | CS |
| 11 | 0.082 | 2.63 | 0.102 | 0.01 | 0.002 | 0.035 | 0.67 | 0.049 | 0.03 | 0.0025 | 0.0033 | |
| 12 | 0.15 | 3.1 | 0.099 | 0.011 | 0.003 | 0.037 | 0.65 | 0.051 | 0.039 | 0.0035 | 0.0031 | |
| 13 | 0.084 | 1.5 | 0.101 | 0.01 | 0.004 | 0.033 | 0.72 | 0.04 | 0.02 | 0.0023 | 0.0031 | |
| 14 | 0.056 | 2.91 | 0.112 | 0.01 | 0.003 | 0.035 | 0.2 | 0.04 | 0.02 | 0.002 | 0.0038 | |
| 15 | 0.17 | 2.7 | 0.1 | 0.01 | 0.003 | 0.03 | 1.5 | 0.041 | 0.04 | 0.0024 | 0.001.1 | |
| 16 | 0.08 | 2.41 | 1.1 | 0.012 | 0.004 | 0.033 | 0.67 | 0.042 | 0.036 | 0.0029 | 0.0033 | |
| 17 | 0.089 | 2.72 | 0.22 | 0.011 | 0.003 | 0.036 | 0.65 | 0.015 | 0 | 0.0031 | 0.0035 | |

*In Table 1, IS is Inventive Steel, and CS is Comparative Steel.

[Table 2]

| Steel No. | Ac3 | Ms | (Si+Cr)/ 2C(Relationship 1) | Remarks |
|---|---|---|---|---|
| 1 | 865.2 | 410 | 9.0 | IS |
| 2 | 865.4 | 427.1 | 9.1 | IS |
| 3 | 874.1 | 419.3 | 12.1 | IS |
| 4 | 873.8 | 433.8 | 13.3 | IS |
| 5 | 868.1 | 415.2 | 7.4 | IS |
| 6 | 868.7 | 418.8 | 7.8 | IS |
| 7 | 865 | 415.6 | 5.2 | IS |
| 8 | 864.2 | 420.9 | 6.6 | IS |
| 9 | 856.9 | 418.6 | 5.3 | IS |
| 10 | 858.8 | 420.2 | 4.0 | CS |
| 11 | 858.2 | 418.4 | 4.7 | CS |
| 12 | 835.8 | 373.4 | 2.5 | CS |
| 13 | 864.4 | 458.9 | 4.9 | CS |
| 14 | 867 | 424.4 | 2.8 | CS |
| 15 | 833.3 | 365 | 4.7 | CS |
| 16 | 913.5 | 419 | 11.1 | CS |
| 17 | 865.2 | 412.9 | 4.9 | CS |

*In Table 2, IS is Inventive Steel, and CS is Comparative Steel.

[Table 3]

| Steel No. | FDT ("C) | CT (°C) | SS (°C) | RCS (°C) | Primary cooling rate (°C/s) | Secondary cooling rate (°C/s) | Remarks |
|---|---|---|---|---|---|---|---|
| 1-1 | 900 | 580 | 830 | 340 | 3 | 17.9 | IE |
| 1-2 | 900 | 580 | 810 | 340 | 2.5 | 17.9 | IE |
| 1-3 | 900 | 580 | 850 | 360 | 3.4 | 16.8 | CE |
| 2-1 | 900 | 580 | 820 | 440 | 2.8 | 12.1 | CE |
| 2-2 | 900 | 580 | 820 | 340 | 2.8 | 17.9 | IE |
| 3 | 900 | 580 | 820 | 350 | 2.8 | 17.2 | IE |
| 4 | 900 | 580 | 820 | 350 | 2.8 | 17.2 | IE |
| 5-1 | 900 | 580 | 810 | 350 | 2.5 | 17.2 | IE |
| 5-2 | 900 | 580 | 820 | 450 | 2.8 | 11.5 | CE |
| 5-3 | 900 | 580 | 840 | 350 | 3.2 | 17.2 | CE |
| 6-1 | 900 | 580 | 820 | 340 | 2.8 | 17.9 | IE |
| 6-2 | 900 | 580 | 760 | 350 | 1.8 | 17.2 | CE |
| 6-3 | 900 | 580 | 890 | 350 | 4.6 | 17.2 | CE |
| 7 | 900 | 580 | 820 | 350 | 2.8 | 17.2 | IE |
| 8 | 900 | 580 | 820 | 350 | 2.8 | 17.2 | IE |

(continued)

| Steel No. | FDT ("C) | CT (°C) | SS (°C) | RCS (°C) | Primary cooling rate (°C/s) | Secondary cooling rate (°C/s) | Remarks |
|---|---|---|---|---|---|---|---|
| 9 | 900 | 580 | 820 | 350 | 2.8 | 17.2 | IE |
| 10 | 900 | 580 | 820 | 350 | 2.8 | 17.2 | CE |
| 11 | 900 | 580 | 820 | 350 | 2.8 | 17.2 | CE |
| 12 | 900 | 580 | 820 | 350 | 2.8 | 17.2 | CE |
| 13 | 900 | 580 | 820 | 350 | 2.8 | 17.2 | CE |
| 14 | 900 | 580 | 820 | 350 | 2.8 | 17.2 | CE |
| 15 | 900 | 580 | 820 | 350 | 2.8 | 17.2 | CE |
| 16 | 900 | 580 | 820 | 350 | 2.8 | 17.2 | CE |
| 17 | 900 | 580 | 820 | 350 | 2.8 | 17.2 | CE |
| *In Table 3, IE is Inventive Example, and CE is Comparative Example. | | | | | | | |

[Table 4]

| Steel No. | B (%) | TM (%) | TM Average particle diameter (um) | B Particle size (um) | Hardness ratio between phases (Relationship 2) | Nano-precipitates (piece/um$^2$) | Remarks |
|---|---|---|---|---|---|---|---|
| 1-1 | 58 | 32 | 1.2 | 2.5 | 1.2 | 1.72 | IE |
| 1-2 | 58 | 24 | 1.3 | 2.3 | 1.2 | 182 | IE |
| 1-3 | 57 | 37 | 1.3 | 2.3 | 1.2 | 182 | CE |
| 2-1 | 41 | 18 | 2.2 | 3.6 | 2.1 | 179 | CE |
| 2-2 | 57 | 28 | 1.6 | 2.6 | 1.3 | 181 | IE |
| 3 | 57 | 24 | 1 | 2.7 | 1.2 | 162 | IE |
| 4 | 61 | 29 | 1.4 | 2.8 | 1.2 | 158 | IE |
| 5-1 | 59 | 28 | 1.3 | 2.7 | 1.3 | 162 | IE |
| 5-2 | 39 | 11 | 2.6 | 3.8 | 2.6 | 161 | CE |
| 5-3 | 53 | 38 | 2.6 | 3.8 | 2.7 | 161 | CE |
| 6-1 | 59 | 28 | 1.7 | 2.1 | 1.3 | 168 | IE |
| 6-2 | 41 | 10 | 1.9 | 4.1 | 2.7 | 158 | CE |
| 6-3 | 59 | 38 | 2.9 | 3.5 | 1.2 | 159 | CE |
| 7 | 62 | 24 | 1.5 | 2.3 | 1.1 | 161 | IE |
| 8 | 59 | 27 | 1.6 | 2.5 | 1.2 | 159 | IE |
| 9 | 54 | 24 | 1.2 | 2.7 | 1.2 | 160 | IE |
| 10 | 62 | 24 | 1.3 | 2.9 | 1.8 | 159 | CE |
| 11 | 54 | 16 | 1.5 | 2.7 | 1.7 | 153 | CE |
| 12 | 58 | 19 | 1.9 | 2.3 | 1.9 | 158 | CE |
| 13 | 49 | 17 | 1.8 | 2.7 | 1.7 | 159 | CE |
| 14 | 52 | 23 | 1.9 | 2.8 | 1.8 | 158 | CE |
| 15 | 38 | 16 | 1.9 | 2.8 | 2.1 | 159 | CE |

(continued)

| Steel No. | B (%) | TM (%) | TM Average particle diameter (um) | B Particle size (um) | Hardness ratio between phases (Relationship 2) | Nano-precipitates (piece/um$^2$) | Remarks |
|---|---|---|---|---|---|---|---|
| 16 | 51 | 11 | 1.5 | 3.2 | 3.1 | 158 | CE |
| 17 | 52 | 21 | 2.3 | 3.1 | 2.1 | 89 | CE |

*In Table 4, IE is Inventive Example, and CE is Comparative Example.

[Table 5]

| Steel No. | YS (Mpa) | TS (Mpa) | T-El (%) | HER (%) | YR | Relationship 3 | Plating Wettability | Remarks |
|---|---|---|---|---|---|---|---|---|
| 1-1 | 881 | 1002 | 9.3 | 55 | 0.88 | 103.1 | 0 | IE |
| 1-2 | 932.3 | 1112 | 8 | 63 | 0.84 | 101.9 | 0 | IE |
| 1-3 | 932.3 | 1112 | 8 | 63 | 0.81 | 104.3 | X | CE |
| 2-1 | 620 | 891 | 11.6 | 39 | 0.70 | 92.4 | 0 | CE |
| 2-2 | 791 | 982 | 9.7 | 62 | 0.81 | 92.4 | 0 | IE |
| 3 | 812 | 992 | 9.5 | 63 | 0.82 | 100.4 | 0 | IE |
| 4 | 801 | 1002 | 12.1 | 58 | 0.80 | 100.2 | 0 | IE |
| 5-1 | 861.9 | 1081.6 | 8.5 | 70 | 0.80 | 103.7 | 0 | IE |
| 5-2 | 669 | 945 | 10.2 | 33 | 0.71 | 104.3 | X | CE |
| 5-3 | 669 | 945 | 10.2 | 33 | 0.71 | 105.5 | X | CE |
| 6-1 | 786.3 | 1001 | 9.6 | 71 | 0.79 | 100.6 | 0 | IE |
| 6-2 | 593 | 922 | 10.5 | 21 | 0.64 | 97.0 | 0 | CE |
| 6-3 | 751 | 864 | 6.1 | 42 | 0.87 | 104.8 | X | CE |
| 7 | 871 | 1081 | 6.5 | 68 | 0.81 | 102.6 | 0 | IE |
| 8 | 801 | 993 | 10.6 | 70 | 0.81 | 97.6 | 0 | IE |
| 9 | 626 | 998 | 9.2 | 40 | 0.63 | 100.4 | 0 | IE |
| 10 | 660 | 1005 | 12.1 | 35 | 0.66 | 104.8 | X | CE |
| 11 | 693 | 1032 | 8.6 | 34 | 0.67 | 108.5 | X | CE |
| 12 | 780 | 1151 | 10.5 | 21 | 0.68 | 129.7 | X | CE |
| 13 | 543.2 | 752.6 | 13.6 | 47 | 0.72 | 99.7 | 0 | CE |
| 14 | 453.2 | 694.8 | 14.3 | 39 | 0.65 | 100.3 | 0 | CE |
| 15 | 965.2 | 1287.6 | 8.6 | 33 | 0.75 | 107.0 | X | CE |
| 16 | 785.2 | 1105.3 | 12.1 | 25 | 0.71 | 115.1 | X | CE |
| 17 | 592.1 | 81.2.6 | 1.1.5 | 34 | 0.73 | 120.3 | X | CE |

*In Table 5, IE is Inventive Example, and CE is Comparative Example.

As illustrated in Tables 1 to 5, since the inventive examples satisfying the steel composition and manufacturing conditions of the present invention exhibit tensile strength of 980 MPa or higher, yield strength of 780 MPa or higher, the yield ratio of 0.8 or higher, and the HER value of 50% or higher; it can be seen that plating wettability and elongation as well as the tensile strength, the yield strength, the yield ratio, and hole expandability (HER) are excellent.

As illustrated in FIG. 1, it can be seen that in Inventive example (5-1) conforming to the present invention an average particle diameter of martensite is 2 μm or less, and an average particle diameter of bainite is 3 μm or less.

Meanwhile, in the case of comparative examples that do not satisfy at least one of the steel composition and manufacturing conditions proposed in the present invention it can be seen that at least one property of tensile strength, yield strength, yield ratio, HER value and plating wettability is inferior or insufficient.

In the case of Comparative Examples (2-1 and 5-2), the composition satisfy the scope of the present invention but the secondary cooling conditions, RCS temperatures, are 440 °C and 450 °C, which do not satisfy the cooling temperature of the Ms temperature or less suggested in the present invention. Therefore, the austenite produced during annealing could not be transformed into martensite due to high temperature overaging, and was generated as high temperature transformation phases such as bainite, granular bainite and the like, such that coarse transformation phases occurred. These coarse transformation phases have high hardness ratios between phases of microstructures, resulting in low yield ratios and deterioration of HER values.

In Comparative Example (6-2), the annealing temperature was very low and annealing was performed in a two-phase region of austenite and ferrite, whereby the bainite fraction was 41% and the tempered martensite transformation fraction was 10%, which did not satisfy the microstructure fraction according to an exemplary embodiment of the present invention. The production of such ferrite caused an increase in deviation of a hardness ratio between phases, resulting in a low yield ratio and deterioration of the HER value.

In Comparative Example (6-3), the annealing temperature was very high temperature of 890 °C, resulting in an increase in the austenitic grain size due to high temperature annealing to increase the size of martensite structure produced during cooling. Thus, martensite having the average particle diameter of 2 μm or less and bainite having the average particle diameter of 3 μm or less could not be manufactured, and thus, the yield ratio and HER value were deteriorated.

Comparative Examples 10 to 15 and 17 did not satisfy the relationship 1. This increase in carbon serves to increase the strength of martensite produced in the quenching process after annealing. However, when overaging after quenching, all martensite cannot be tempered and remain in lath form. In the case of the tempered martensite generated at this time, the strength decreases due to the precipitation of carbon, but the lath-type martensite which is not tempered has a very high strength due to the added carbon as a very stable martensite. Therefore, if the carbon content exceeds the composition suggested in the present disclosure steel, the HER value and yield ratio do not satisfy the criteria suggested in the inventive steel due to the increase in the strength difference between the lath martensite and the tempered martensite produced in the overaging treatment.

Comparative Examples 1-3, 5-2, 5-3, 6-3, 10, 11, 12, 15, 16 and 17 did not satisfy the relationship 3, resulting in poor plating wettability. As the B and Mn contents increase, Mn-B-based oxides are formed on the surface during annealing, thereby weakening the wettability of molten zinc and composite oxide to deteriorate plating wettability. Even in the case in which the contents of B and Mn are increased, when the annealing temperature is relatively low, Mn-B oxide is relatively less generated, and thus the plating adhesion is good.

In Comparative Examples 12 to 17, the carbon content or Mn, Cr, Ti and Nb contents did not satisfy the component range according to an exemplary embodiment of the present disclosure. In Comparative Examples 12 and 15, the C content was high, and thus, the hardness ratio between phases was high, and the yield ratio and HER value were deteriorated by the generation of coarse martensite.

In Comparative Examples 13 and 14, due to the low Mn or Cr contents, sufficient transformation of martensite did not occur, and Comparative Example 16 has a very high Si content. In general, Si is a ferrite forming element, and when the addition amount is increased, the formation of ferrite is promoted upon cooling. In Comparative Example 16, the amount of martensite produced due to high Si addition was 11%, which did not satisfy the criteria presented in the present disclosure, and the yield ratio was low and the HER value deteriorated due to an increase in the phase-to-phase hardness ratio.

Comparative Example 17 is a case in which Ti and Nb contents did not satisfy the composition range proposed in the present disclosure. As mentioned above, Ti and Nb are combined with carbon to form nano-precipitates, and these nano-precipitates strengthen the matrix structure to reduce the difference in hardness between phases. However, in Comparative Example 17, Ti and Nb were very small, so that sufficient precipitates could not be formed, and as a result, yield ratios and HER values were deteriorated due to the distribution of nanoprecipitates and an increase in the hardness ratio between phases.

**Claims**

1. A high yield ratio-type high strength steel sheet comprising:

   in weight%, 0.04 to 0.09% of C, 0.2% or less excluding 0% of Si, 2.0 to 3.5% of Mn, 0.3 to 1.2% of Cr, 0.03 to 0.08% of Ti, 0.01 to 0.05% of Nb, 0.0010 to 0.0050% of B, 0.01 to 0.10% of Sol.Al, 0.001 to 0.10% of P, 0.010% or less including 0% of S, 0.010% or less excluding 0% of N, a remainder of Fe and unavoidable impurities, the contents of Si, Cr and C satisfying the following relationship 1,

$$[\text{Relationship 1}]$$
$$(Si + Cr)/2C \geq 5,$$

where each component indicates a weight content; and
as a microstructure, in an area fraction, 50% or more of bainite, 20 to 40% of tempered martensite, and residual ferrite, in which a hardness ratio of a bainite phase and a tempered martensite phase at a 1/4t point of a thickness of a steel sheet measured as detailed in the description, represented by the following relationship 2, is 1.3 or less, where t is the thickness of the steel sheet in millimeter, the tempered martensite has an average particle diameter of 2 $\mu$m or less, the bainite has an average particle diameter of 3 $\mu$m or less, measured as detailed in the description,

$$[\text{Relationship 2}]$$
$$(HB/HTM) \leq 1.3,$$

where HB is a bainite hardness, and HTM is a tempered martensite hardness.

2. The high yield ratio-type high strength steel sheet of claim 1, wherein an area fraction of a bainite structure having a particle size of more than 3 $\mu$m measured as detailed in the description, is 5% or less.

3. The high yield ratio-type high strength steel sheet of claim 2, wherein a distribution density of a nano precipitate having a diameter of 10 nm or less among the bainite and tempered martensite structures is 150 pieces/$\mu m^2$ or more.

4. The high yield ratio-type high strength steel sheet of claim 1, wherein the steel sheet has, measured as detailed in the description, a tensile strength of 980 MPa or higher, a yield strength of 780 MPa or higher, a yield ratio of 0.8 or higher, and a HER value of 50% or higher.

5. The high yield ratio-type high strength steel sheet of claim 1, wherein the steel sheet is provided with a zinc-based plating layer disposed on at least one surface thereof.

6. A method of manufacturing a high yield ratio-type high strength steel sheet, comprising:

preparing a slab containing, in weight%, 0.04 to 0.09% of C, 0.2% or less excluding 0% of Si, 2.0 to 3.5% of Mn, 0.3 to 1.2% of Cr, 0.03 to 0.08% of Ti, 0.01 to 0.05% of Nb, 0.0010 to 0.0050% of B, 0.01 to 0.10% of Sol.Al, 0.001 to 0.10% of P, 0.010% or less including 0% of S, 0.010% or less excluding 0% of N, a remainder of Fe and unavoidable impurities, the contents of the Si, the Cr and the C satisfying the following relationship 1,

$$[\text{Relationship 1}]$$
$$(Si + Cr)/2C \geq 5,$$

where each component indicates a weight content;
hot rolling the slab such that a temperature at a finish rolling outlet side is $Ar_3$ to $A_{r3}$+50°C so as to obtain a hot rolled steel sheet;
coiling the hot rolled steel sheet at a temperature in a range of 600 to 750 °C;
cold rolling the hot rolled steel sheet at a reduction ratio of 40 to 70% so as to obtain a cold rolled steel sheet;
continuously annealing the cold rolled steel sheet at a temperature in a range of $Ac_3$-60 to $Ac_3$ °C;
performing a primary cooling to a temperature of 600 to 700 °C at a cooling rate of 1 to 20 °C/sec after the continuously annealing;
after the primary cooling, performing a secondary cooling to a temperature of Ms-100 to Ms °C at a cooling rate of 5 to 20 °C/second; and
after the secondary cooling, performing an overaging treatment,
wherein steel sheet obtained after the overaging treatment has the microstructure, comprising, in an area fraction, 50% or more of bainite, 20 to 40% of tempered martensite, and residual ferrite, in which a hardness ratio of a bainite phase and a tempered martensite phase at a 1/4t point of a thickness of a steel sheet measured with the methods mentioned in the description represented by the following relationship 2, is 1.3 or less, wherein t is the thickness of the steel sheet in millimeter,

the tempered martensite has an average particle diameter of 2 $\mu$m or less, the bainite has an average particle diameter of 3 $\mu$m or less, measured with the method mentioned in the description and contents of the Mn and the B and an annealing temperature satisfy the following relationship 3,

$$\text{[Relationship 2]}$$
$$(HB/HTM) \leq 1.3,$$

where HB is a bainite hardness, and HTM is a tempered martensite hardness,

$$\text{[Relationship 3]}$$
$$19000 [B] + 4.5 [Mn] + 0.06a \leq 104,$$

where [B] and [Mn] indicate weight percent of a corresponding element, and a represents the annealing temperature in °C.

7. The method of manufacturing a high yield ratio-type high strength steel sheet of claim 6, further comprising a zinc-based plating operation of forming a zinc-based plating layer on at least one surface of a steel sheet after the overaging treatment.

8. The method of manufacturing a high yield ratio-type high strength steel sheet of claim 6, further comprising an operation of skin-pass rolling at an elongation of 0.1 to 1.0% after the overaging treatment or after the zinc-based plating.

**Patentansprüche**

1. Hochfestes Stahlblech vom Typ mit hohem Streckverhältnis, umfassend:

in Gewichts-%, 0,04 bis 0,09 % C, 0,2 % oder weniger, ausgenommen 0 %, Si, 2,0 bis 3,5 % Mn, 0,3 bis 1,2 % Cr, 0,03 bis 0,08 % Ti, 0,01 bis 0,05 % Nb, 0,0010 bis 0,0050 % B, 0,01 bis 0,10 % lösl. Al, 0,001 bis 0,10 % P, 0,010 % oder weniger, einschließlich 0 %, S, 0,010 % oder weniger, ausgenommen 0 %, N, einen Restbetrag aus Fe und unvermeidbaren Verunreinigungen, wobei die Gehalte an Si, Cr und C die folgende Beziehung 1 erfüllen,

$$\text{[Beziehung 1]}$$
$$(Si + Cr)/2C \geq 5,$$

wobei jede Komponente einen Gewichtsanteil angibt; und

als Mikrogefüge, in Flächenanteil, 50 % oder mehr Bainit, 20 bis 40 % angelassenen Martensit und Restferrit, wobei ein Härteverhältnis einer Bainitphase und einer angelassenen Martensitphase an einem 1/4t-Punkt einer Dicke eines Stahlblechs, gemessen wie in der Beschreibung detailliert beschrieben, dargestellt durch die folgende Beziehung 2, 1,3 oder weniger beträgt, wobei t die Dicke des Stahlblechs in Millimeter ist,

der angelassene Martensit einen durchschnittlichen Partikeldurchmesser von 2 $\mu$m oder weniger aufweist, der Bainit einen durchschnittlichen Partikeldurchmesser von 3 $\mu$m oder weniger aufweist, gemessen wie in der Beschreibung detailliert beschrieben,

$$\text{[Beziehung 2]}$$
$$(HB/HTM) \leq 1,3,$$

wobei HB eine Bainithärte und HTM eine Härte des angelassenen Martensits ist.

2. Hochfestes Stahlblech vom Typ mit hohem Streckverhältnis nach Anspruch 1, wobei ein Flächenanteil eines Bainitgefüges mit einer Partikelgröße von mehr als 3 $\mu$m, gemessen wie in der Beschreibung detailliert beschrieben, 5 % oder weniger beträgt.

3. Hochfestes Stahlblech vom Typ mit hohem Streckverhältnis nach Anspruch 2, wobei eine Verteilungsdichte einer Nanoausscheidung mit einem Durchmesser von 10 nm oder weniger unter den Bainit- und angelassenen Martensitgefügen, gemessen wie in der Beschreibung detailliert beschrieben, 150 Stück/$\mu$m$^2$ oder mehr beträgt.

4. Hochfestes Stahlblech vom Typ mit hohem Streckverhältnis nach Anspruch 1, wobei das Stahlblech, gemessen wie in der Beschreibung detailliert beschrieben , eine Zugfestigkeit von 980 MPa oder mehr, eine Streckgrenze von 780 MPa oder mehr, ein Streckverhältnis von 0,8 oder mehr und einen HER-Wert von 50 % oder mehr aufweist.

5. Hochfestes Stahlblech vom Typ mit hohem Streckverhältnis nach Anspruch 1, wobei das Stahlblech mit einer Plattierungsschicht auf Zinkbasis versehen ist, die auf mindestens einer seiner Oberflächen angeordnet ist.

6. Verfahren zur Herstellung eines hochfesten Stahlblechs vom Typ mit hohem Streckverhältnis, umfassend:

Herstellen einer Bramme, die in Gewichts-% 0,04 bis 0,09 % C, 0,2 % oder weniger, ausgenommen 0 %, Si, 2,0 bis 3,5 % Mn, 0,3 bis 1,2 % Cr, 0,03 bis 0,08 % Ti, 0,01 bis 0,05 % Nb, 0,0010 bis 0,0050 % B, 0,01 bis 0,10 % lösl. Al, 0,001 bis 0,10 % P, 0,010 % oder weniger, einschließlich 0 %, S, 0,010 % oder weniger, ausgenommen 0 %, N, einen Restbetrag aus Fe und unvermeidbaren Verunreinigungen enthält, wobei die Gehalte an Si, Cr und C die folgende Beziehung 1 erfüllen,

[Beziehung 1]

$$(Si + Cr)/2C \geq 5,$$

wobei jede Komponente einen Gewichtsanteil angibt;
Warmwalzen der Bramme, so dass eine Temperatur an einer Fertigwalz-Austrittsseite Ar$_3$ bis Ars+50 °C beträgt, um ein warmgewalztes Stahlblech zu erhalten;
Aufwickeln des warmgewalzten Stahlblechs bei einer Temperatur im Bereich von 600 bis 750 °C;
Kaltwalzen des warmgewalzten Stahlblechs mit einem Reduktionsverhältnis von 40 bis 70 %, um ein kaltgewalztes Stahlblech zu erhalten;
kontinuierliches Glühen des kaltgewalzten Stahlblechs bei einer Temperatur in einem Bereich von Acs-60 bis Ac$_3$ °C;
Durchführen einer Primärkühlung auf eine Temperatur von 600 bis 700 °C mit einer Abkühlgeschwindigkeit von 1 bis 20 °C/s nach dem kontinuierlichen Glühen;
nach der Primärkühlung Durchführung einer Sekundärkühlung auf eine Temperatur von Ms-100 bis Ms °C mit einer Abkühlgeschwindigkeit von 5 bis 20 °C/Sekunde; und nach der Sekundärkühlung Durchführen einer Überalterungsbehandlung,
wobei das nach der Überalterungsbehandlung erhaltene Stahlblech das Mikrogefüge aufweist, das, in Flächenanteil, 50 % oder mehr Bainit, 20 bis 40 % angelassenen Martensit und Restferrit umfasst, wobei ein Härteverhältnis einer Bainitphase und einer angelassenen Martensitphase an einem 1/4t-Punkt einer Dicke eines Stahlblechs, gemessen mit den in der Beschreibung genannten Verfahren, dargestellt durch die folgende Beziehung 2, 1,3 oder weniger beträgt, wobei t die Dicke des Stahlblechs in Millimeter ist,
der angelassene Martensit einen durchschnittlichen Partikeldurchmesser von 2 $\mu$m oder weniger aufweist, der Bainit einen durchschnittlichen Partikeldurchmesser von 3 $\mu$m oder weniger aufweist, gemessen mit dem in der Beschreibung genannten Verfahren, und Gehalte an Mn und B und eine Glühtemperatur die folgende Beziehung 3 erfüllen,

[Beziehung 2]

$$(HB/HTM) \leq 1,3,$$

17

wobei HB eine Bainithärte und HTM eine Härte des angelassenen Martensits ist,

[Beziehung 3]

$$19000 \, [B] + 4{,}5 \, [Mn] + 0{,}06a \leq 104,$$

wobei [B] und [Mn] die Gewichtsprozente des entsprechenden Elements angeben und a die Glühtemperatur in °C repräsentiert.

7. Verfahren zur Herstellung eines hochfesten Stahlblechs vom Typ mit hohem Streckverhältnis nach Anspruch 6, ferner umfassend einen Plattierungsvorgang auf Zinkbasis zur Bildung einer Plattierungsschicht auf Zinkbasis auf mindestens einer Oberfläche eines Stahlblechs nach der Überalterungsbehandlung.

8. Verfahren zur Herstellung eines hochfesten Stahlblechs vom Typ mit hohem Streckverhältnis nach Anspruch 6, ferner umfassend einen Vorgang des Dressierwalzens mit einer Dehnung von 0,1 bis 1,0 % nach der Überalterungsbehandlung oder nach der Plattierung auf Zinkbasis

## Revendications

1. Tôle d'acier à haute résistance de type à rapport d'élasticité élevé comprenant :

   en % en poids, 0,04 à 0,09 % de C, 0,2 % ou moins, excluant 0 %, de Si, 2,0 à 3,5 % de Mn, 0,3 à 1,2 % de Cr, 0,03 à 0,08 % de Ti, 0,01 à 0,05 % de Nb, 0,0010 à 0,0050 % de B, 0,01 à 0,10 % d'Al sol., 0,001 à 0,10 % de P, 0,010 % ou moins, incluant 0 %, de S, 0,010 % ou moins, excluant 0 %, de N, un reste de Fe et des impuretés inévitables, les teneurs en Si, Cr et C satisfaisant la relation 1 suivante,

   [Relation 1]

   $$(Si + Cr)/2C \geq 5,$$

   où chaque composant indique une teneur en poids ; et
   comme microstructure, dans une fraction de superficie, 50 % ou plus de bainite, 20 à 40 % de martensite revenue, et de la ferrite résiduelle, dans laquelle un rapport de dureté entre une phase bainite et une phase de martensite revenue à un point 1/4 t d'une épaisseur d'une tôle d'acier mesuré comme détaillé dans la description, représenté par la relation 2 suivante, est de 1,3 ou moins, où t est l'épaisseur de la tôle d'acier en millimètres, la martensite revenue a un diamètre moyen des particules de 2 $\mu$m ou moins, la bainite a un diamètre moyen des particules de 3 $\mu$m ou moins, mesurés comme détaillé dans la description,

   [Relation 2]

   $$(HB/HTM) \leq 1,3,$$

   où HB est une dureté de bainite et HTM est une dureté de martensite revenue.

2. Tôle d'acier à haute résistance de type à rapport d'élasticité élevé selon la revendication 1, dans laquelle une fraction de superficie d'une structure de bainite ayant une taille des particules de plus de 3 $\mu$m mesurée comme détaillé dans la description, est de 5 % ou moins.

3. Tôle d'acier à haute résistance de type à rapport d'élasticité élevé selon la revendication 2, dans laquelle une densité de distribution d'un nanoprécipité ayant un diamètre de 10 nm ou moins parmi les structures de bainite et de martensite revenue mesurée comme détaillé dans la description, est de 150 pièces/$\mu$m$^2$ ou plus.

4. Tôle d'acier à haute résistance de type à rapport d'élasticité élevé selon la revendication 1, la tôle d'acier ayant, mesurés comme détaillé dans la description, une résistance à la traction de 980 MPa ou plus, une limite d'élasticité de 780 MPa ou plus, un rapport d'élasticité de 0,8 ou plus, et une valeur HER de 50 % ou plus.

5. Tôle d'acier à haute résistance de type à rapport d'élasticité élevé selon la revendication 1, la tôle d'acier étant pourvue d'une couche de placage à base de zinc disposée sur au moins une de ses surfaces.

6. Procédé de fabrication d'une tôle d'acier à haute résistance de type à rapport d'élasticité élevé, comprenant :

la préparation d'une brame contenant, en % en poids, 0,04 à 0,09 % de C, 0,2 % ou moins, excluant 0 %, de Si, 2,0 à 3,5 % de Mn, 0,3 à 1,2 % de Cr, 0,03 à 0,08 % de Ti, 0,01 à 0,05 % de Nb, 0,0010 à 0,0050 % de B, 0,01 à 0,10 % d'Al sol., 0,001 à 0,10 % de P, 0,010 % ou moins, incluant 0 %, de S, 0,010 % ou moins, excluant 0 %, de N, un reste de Fe et des impuretés inévitables, les teneurs en le Si, le Cr et le C satisfaisant la relation 1 suivante,

$$[\text{Relation 1}]$$

$$(Si + Cr)/2C \geq 5,$$

où chaque composant indique une teneur en poids ;

le laminage à chaud de la brame de telle sorte qu'une température à un côté sortie de laminoir de finition est Ar3 à Ar3 + 50 °C, de façon à obtenir une tôle d'acier laminée à chaud ;

le bobinage de la tôle d'acier laminée à chaud à une température dans une plage de 600 à 750 °C ;

le laminage à froid de la tôle d'acier laminée à chaud à un rapport de réduction de 40 à 70 % de façon à obtenir une tôle d'acier laminée à froid ;

le recuit continu de la tôle d'acier laminée à froid à une température dans une plage de Ac3 - 60 à Ac3 °C;

la réalisation d'un refroidissement primaire à une température de 600 à 700 °C à une vitesse de refroidissement de 1 à 20 °C/s après le recuit continu ;

après le refroidissement primaire, la réalisation d'un refroidissement secondaire à une température de Ms-100 à Ms °C à une vitesse de refroidissement de 5 à 20 °C/seconde ; et

après le refroidissement secondaire, la réalisation d'un traitement de survieillissement,

dans lequel la tôle d'acier obtenue après le traitement de survieillissement a la microstructure, comprenant, dans une fraction de superficie, 50 % ou plus de bainite, 20 à 40 % de martensite revenue, et de la ferrite résiduelle, dans laquelle un rapport de dureté entre une phase de bainite et une phase de martensite revenue à un point 1/4 t d'une épaisseur d'une tôle d'acier mesuré avec les procédés mentionnés dans la description, représenté par la relation 2 suivante, est de 1,3 ou plus, dans lequel t est l'épaisseur de la tôle d'acier en millimètres,

la martensite revenue a un diamètre moyen des particules de 2 μm ou moins, la bainite a un diamètre moyen des particules de 3 μm ou moins, mesuré avec le procédé mentionné dans la description, et les teneurs en le Mn et le B et une température de recuit satisfont la relation 3 suivante,

$$[\text{Relation 2}]$$

$$(HB/HTM) \leq 1,3,$$

où HB est une dureté de bainite, et HTM est une dureté de martensite revenue,

$$[\text{Relation 3}]$$

$$19\ 000[B] + 4,5[Mn] + 0,06a \leq 104,$$

où [B] et [Mn] indiquent un pourcentage en poids d'un élément correspondant, et a représente la température de recuit en °C.

7. Procédé de fabrication d'une tôle d'acier à haute résistance de type à rapport d'élasticité élevé selon la revendication 6, comprenant en outre une opération de placage à base de zinc consistant à former une couche de placage à base de zinc sur au moins une surface d'une tôle d'acier après le traitement de survieillissement.

**8.** Procédé de fabrication d'une tôle d'acier à haute résistance de type à rapport d'élasticité élevé selon la revendication 6, comprenant en outre une opération de laminage d'écrouissage à un allongement de 0,1 à 1,0 % après le traitement de survieillissement ou après le placage à base de zinc.

【Fig.1】

2 μm

【Fig.2】

【Fig.3】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4289120 A
- JP 2010090432 A
- KR 101630975 B1
- KR 101676137 B1